# Europäisches Patentamt

# European Patent Office

# Office européen des brevets

(11) Publication number: **0 095 814**
**B1**

(12)

# EUROPEAN PATENT SPECIFICATION

(45) Date of publication of the patent specification:
21.08.85

(51) Int. Cl.⁴: **C 05 C 1/02**

(21) Application number: 83200759.5

(22) Date of filing: 28.05.83

(54) **Process for preparing non-caking ammonium nitrate-containing granules.**

(30) Priority: 01.06.82 NL 8202216

(43) Date of publication of application:
07.12.83 Bulletin 83/49

(45) Publication of the grant of the patent:
21.08.85 Bulletin 85/34

(84) Designated Contracting States:
**AT BE DE FR GB IT NL SE**

(56) References cited:
**DE - A - 1 924 334**
**DE - A - 2 122 265**
**FR - A - 2 123 628**
**GB - A - 1 171 976**
**GB - A - 1 189 448**
**GB - A - 2 064 995**
**US - A - 4 190 622**
**US - A - 4 316 736**

(73) Proprietor: **UNIE VAN KUNSTMESTFABRIEKEN B.V.,**
**Mallebaan 81, NL-3581 CG Utrecht (NL)**

(72) Inventor: **de Vries, Hendrik Anton Willem, Baron de**
**Rosenlaan 12, NL-6191 KK Beek (L) (NL)**

(74) Representative: **Roeffen, Wilhelmus Johannes Maria et**
**al, OCTROOIBUREAU DSM Postbus 9, NL-6160 MA**
**Geleen (NL)**

## Description

The invention relates to a process for preparing non-caking ammonium nitrate-containing granules, in which process hot granules from a granulating zone are dried and screened and the granules with the desired grain size are rapidly cooled in a single fluid bed.

A process for cooling hot ammonium nitrate granules in a fluid bed is known from the Russian patent specification 334.180. According to this known process the hot granules are first cooled to 80—125°C, preferably to 85°C, and subsequently to 40—50°C in a fluid bed, in which process granules are obtained having an increased mechanical strength. A disadvantage of this process is that the granules thus obtained will cake seriously and will not be freeflowing, so that — in order to obtain a marketable product — the granules will have to be treated with a large quantity of a powder-containing organic coating agent, which, of course, will involve high costs and lower the nutrient content of the product obtained, while on the other side the quantity of coating agent applied will not always be adequate, because for reasons of safety a limit for organic coating agents ($\leq 0.4\%$) has been set in respect of ammonium nitrate-containing fertilizers.

A process which makes it possible to prepare ammonium nitrate granules having a reduced caking tendency is known from NL-A-7 902 086 (corresponds to US-A-4 316 736). According to this known process hot ammonium nitrate granules stabilized with magnesium nitrate are cooled by first cooling them in a fluid bed to for instance, 80°C, by subsequently cooling them slowly to 50°C in a drum cooler and finally further cooling the product in any desired way, in which process granules are obtained having an increased bulk density. A disadvantage of this process is that between 70 and 50°C, the cooling must proceed very slowly, which requires a long time of residence in the relative cooling zone and, consequently, extensive cooling equipment.

According to the process described in the non-prepublished European patent application 82 201 130.0 (EP-A-0 075 359), non-caking ammonium nitrate-containing granules can be obtained by cooling hot granules having a temperature higher than 90°C in a first fluid bed to a temperature of between 55 and 75°C, allowing the granules to age for a few minutes without being heated or cooled and subsequently cooling them in a second fluid bed to a temperature of between 30 and 50°C. Though in applying this process a product is obtained having excellent properties in respect of caking, the disadvantage of this process, if applied on a industrial scale, is that two fluid bed coolers are required and that, moreover, for the ageing step a relatively large receiving tank is necessary.

The invention now provides a process in which it is possible to cool hot ammonium nitrate-containing granules by means of only one fluid bed and in which granules are obtained that do not or hardly cake.

This is achieved according to the invention in that, in the cooling process in the fluid bed, the formation of ammonium nitrate in crystal modification IV is practically avoided by cooling the granules, if the initial temperature of the granules in the cooling process is above 84°C, to a temperature of between 50 and 60°C and by subsequently, during storage in bulk, further cooling the granules thus cooled and, if the initial temperature of the granules in the cooling process is lower than or equal to 84°C, by cooling the granules to a temperature of between 32 and 40°C.

According to one mode of realizing the process according to the invention, the granules are supplied for this purpose to the fluid bed with a temperature higher than 84°C and cooled in the bed to a temperature of between 50 and 60°C, upon which the product is allowed to cool further, stored in bulk. An advantage of this mode of realization is that thanks to the permissible high temperature of the granules supplied in a high temperature can be applied in the drying zone so that a relatively small drying device will suffice. It has been found that, indeed, the product obtained in this mode of realization does not cake to form lumps, but on the other side it is not perfectly free-flowing. The product shows a certain stickiness as it were. This can be partly eliminated by treating the granules before shipment with an organic coating agent, for instance consisting of a mixture of one or more polyoxyalkylates and one or more anionogenic and/or cationogenic surface-active substances, dissolved in a hydrocarbon oil, and subsequently applying an inorganic powder-containing coat to the granules treated.

In the said mode of realizing the present process the hot granules are cooled in the fluid bed to a temperature of between 50 and 60°C. It has been found that these temperature limits are fairly critical. When cooling to a lower temperature, granules are obtained that cake together very seriously. This can perhaps be explained by the transition of the ammonium nitrate from crystal modification II to an unstable modification IV at about 50°C. when the hot granules are cooled rapidly and perhaps by the subsequent transition to modification III. Such abrupt transitions are accompanied by damage to the grain structure and dust formation and subsequently, as a consequence, by an increased caking tendency.

If, on the other side, the cooling is only effected to temperatures higher than 60°C, relatively hot granules are obtained, showing a rather high degree of stickiness. This can be avoided only partly by an increase in the quantity of coating agent.

According to a preferred mode of realizing the process according to the invention, the granules are supplied wholly or largely to the fluid bed with a temperature $\leq 84°C$ and are cooled in the bed to a temperature of between 32 and 40°C.

Preference is given to cooling the granules to 32—35°C. In this process a product is obtained that will not cake on shipment and will, moreover, be perfectly free-flowing. As a consequence the quantity of coating agent can be reduced. Particularly a treatment with an inorganic powder wil no longer be necessary. It has, moreover, been found that the bulk density of granules thus obtained is very high ( > 1000 g/l).

In priciple there are various possibilities of setting the temperature of the granules supplied at a value ≤84°C. This might be effected, for instance, by incorporating between the screening zone and the fluid bed a cooling device in which the granules are cooled relatively slowly from the granulating temperature to ≤84°C. The disadvantage of this method is that such a cooling step involves rather high costs. Preference is therefore given to setting the desired temperature by regulating the temperature in the drying zone. It has been found that, by an improved contact between the granules and the drying air and/or prolongation of the drying time, on the one side a sufficiently low moisture content of the outgoing granules may be achieved, at such a low temperature of the drying air that, on the other side, the granules supplied to the fluid bed have a temperature equal to or lower than 84°C.

It has been found that the said temperature limit of 84°C is rather critical. If the granules supplied are fed wholly or largely with a higher temperature, granules are obtained, after cooling to 32—40°C, that will show very serious caking. This might be explained by the said transition from crystal modification II to unstable modification IV and possibly that to III. It has further been found that if a small part of the granules supplied to the bed contains ammoniumnitrate in crystal modification II, a noncaking product can yet be obtained if care is taken that there are enough crystals with ammoniumnitrate in crystal modification III, for instance by feeding the recycle material supplied in modification III to the granulating zone.

In this preferred mode of realization the granules are cooled in the bed to a temperature of between 32 and 40°C. It has been found that, if cooled to a temperature lower than 32°C, the result will be a product having a strongly increased caking tendency and a reduced mechanical strength. An explanation for this phenomenon is that, during such a cooling process, a rapid transition to ammonium nitrate crystal modification IV occurs, which will be accompanied by damage to the grain structure. If cooling is effected to a temperature above 40°C, a relatively hot granulate will result, which will often have a temperature higher than than 32°C even after storage in bulk. Such a product will show a relatively high degree of stickiness, unless coated with a considerable quantity of inorganic powder.

If according to the preferred mode of realization described above a granular product is prepared containing calcium carbonate and NH4NO3, it will be found that the average diameter of the particles is equal to or slightly smaller than that of granules obtained by applying the processes known in the art. It has been found that this diameter can be increased by starting, in the granulating process, from a liquid composition containing calcium carbonate and ammonium nitrate, for instance a melt, having a slightly higher water content. As a result, however, the water content of the final product will increase as well. According to the invention it has been found that — starting from a composition having an increased water content — a product can be prepared having a low water content and a relatively large diameter if during and/or before the granulation sulphate ions are added to the mixture. This can be effected by, among other things, suppling a little sulphuric acid to the neutralization one or by adding an inorganic sulphate to the melt or solution formed.

In applying the process according to the invention the temperature in the fluid bed is set in a manner known per se by regulating the temperature and the quantity of gas to be passed through, which is preferably air. The offgas from the bed can be purified of entrained dust also in a manner known in the art, for instance by means of a scrubber, a (wet) filter, a cyclone, and subsequently be discharged.

Though it is possible in principle for the granular product obtained from the bed to be cooled in a cooling device, this product is preferably stored in bulk and subsequently shipped. If so desired, the product can be treated with a coating agent, in which treatmend a product obtained according to the mode of realization described first is preferably provided with an organic coating agent and treated with a powder.

The process according to the invention can be applied in preparing various ammonium nitrate-containing granules, for instance ammonium nitrate, calciumammonium nitrate, magnesiumammonium nitrate and sulphate-ammonium nitrate granules, granules containing dolomite and NH4NO3 and NH4NO3-containing NP and NPK granules. The way in which these granules are formed is not essential. The present process can be applied to, for instance, granules obtained through granulation in a drum, screw, fluid or spouted bed, or by prilling.

The invention is further elucidated in the following examples without, however, being restricted by them.

## Example I

Calciumammonium nitrate granules (74% (wt) NH4NO3 and 26% (wt) limestone) obtained by granulation in a screw granulator were fed with a temperature of about 130°C to a drying device. The dried granules (temperature 84°C) were subsequently separated by means of a screen into a fraction > 4 mm, a fraction < 2 mm and a fraction of 2—4 mm. This last-mentioned fraction was fed with a temperature of 83—84°C to a bed of calciumammonium nitrate particles. The bed was kept in a fluid state by passing through an upward air stream having a temperature of 25—26°C, upon which the granules were carried off from the bed with a temperature of between 33 and 35°C.

Part of this product was coated with 0.12% (wt) of a mixture consisting of 80 parts by weight mineral oil and 20 parts by weight fatty amines.

Of both the coated and non-coated product the caking tendency was determined via the socalled lump test. To this end three samples of these granules were stored in small bags for 1 day under a pressure of 2 bar, subsequently thrown twice from a height of 60 cm, upon which the weight percentage of the caked granules was measured. Of the three non-coated sampels the lump percentage was 20, 22 and 24% respectively, whereas that of the three coated samples was always 0%.

As standard for a product acceptable for storage and shipment a lump percentage ≤5% (wt) can be mentioned here. The bulk densities of the three coated samples were 1005, 1010 and 1015 g/l respectively.

Comparative example A

The process of example I was repeated on the understanding that the granules were cooled in the bed to 30, 28 and 25°C respectively by means of an air stream having a temperature of 20, 12 and 10°C respectively. The lump percentage of the non-coated product was 31, 40 and 32% respectively, of the coated product 16, 24 and 27% respectively.

The bulk density of the product was 970—990 g/l.

Example II

The process of Example I was repeated on the understanding that the granules from the drying device had a temperature of 92—95°C and were cooled in the bed to about 51°C by means of air of about 40°C. The lump percentage of the non-coated product was about 26%, of the coated product <0.5%. The bulk density was 985 g/l on average.

Comparative example B

The process of example II was repeated on the understanding that the granules were cooled in the bed to about 40—42°C by means of air having a temperature of 30°C. The lump percentage of the non-coated product was 35%, of the coated product about 10%.

Example III

The stickiness of the coated product of example I as well as example II was determined after 14 days' storage by means of the socalled penetration force test. To this end a glass wide-mouth bottle of 1000 cm³ (18 cm high and 10 cm diameter), the cylindrical part of which is 13 cm high, is filled with granules to just above this cylindrical part and the bottle is placed on a platform scale. Subsequently a penetrometer (= stainless steel pin, 25 cm long and 5 mm thick, tapering on one side over 1.5 cm) was pushed into the product at a constant, low speed. The force measured was that required to drive the pin 12 cm deep into the product. The penetrating force required for the product of example I was less than 500 grammes, for the product of example II more than about 2000 grammes.

Part of the product of example II a treated with 1% (wt) finely distributed calcium carbonate. This time the penetration force required was about 500 grammes.

## Claims

1. Process for preparing non-caking, ammonium nitrate-containing granules, in which process hot granules from a granulating zone are dried and screened and the granules with the desired grain size are rapidly cooled in a single fluid bed, characterized in that, in the cooling process in the fluid bed, the formation of ammonium nitrate in crystal modification IV is practically avoided by cooling the granules, if the initial temperature of the granules in the cooling process is above 84°C, to a temperature of between 50 and 60°C and by subsequently, during storage in bulk, further cooling the granules thus cooled and, if the initial temperature of the granules in the cooling process is lower than or equal to 84°C, by cooling the granules to a temperature of between 32 and 40°C.

2. Process according to claim 1, in which process granules having an initial temperature of above 84°C are cooled to a temperature of between 50 and 60°C, characterized in that the granules obtained are coated before storage with an organic coat and are subsequently treated with an inorganic powder.

3. Process according to claim 1, in which process granules having an initial temperature lower than or equel to 84°C are cooled, characterized in that the granules are cooled to a temperature of between 32 and 35°C.

4. Process according to claim 1 or 3, in which process granules having an initial temperature lower than or equel to 84°C are cooled, characterized in that granules started from are obtained by supplying, to the granulating zone, core particles containing ammonium nitrate in crystal modification III.

## Patentansprüche

1. Verfahren zur Herstellung von nicht zusammenbackenden, Ammoniumnitrat enthaltenden Granulatkörnern, bei welchem Verfahren heiße, aus einer Granulierzone kommende Körner getrocknet und gesiebt werden und die Körner mit der gewünschten Korngröße rasch in einem einzigen Wirbelbett gekühlt werden, dadurch gekennzeichnet, daß beim Kühlvorgang im Wirbelbett die Bildung von Ammoniumnitrat in der Kristallmodifikation IV praktisch vermieden wird durch Abkühlen der Körner, wenn die Anfangstemperatur der Körner beim Kühlvorgang über 84°C beträgt, auf eine Temperatur zwischen 50 und 60°C und, anschließend, durch weiteres Abkühlen der so gekühlten Körner während der Lagerung in der Masse, und, wenn die Anfangstemperatur der Körner beim Kühlvorgang niedriger als oder gleich 84°C ist, durch Abkühlen der Körner auf eine Temperatur zwischen 32 und 40°C.

2. Verfahren nach Anspruch 1, wobei Körner mit einer Anfangstemperatur von über 84°C auf eine Temperatur zwischen 50 und 60°C abgekühlt werden, dadurch gekennzeichnet, daß die erhaltenen Granulatkörner vor der Lagerung mit einer organischen Beschichtung versehen und anschließend mit einem anorganischen Pulver behandelt werden.

3. Verfahren nach Anspruch 1, wobei Körner mit einer Anfangstemperatur niedriger als oder gleich 84°C abgekühlt werden, dadurch gekennzeichnet, daß die Körner auf eine Temperatur zwischen 32 und 35°C abgekühlt werden.

4. Verfahren nach Anspruch 1 oder 3, wobei Körner mit einer Anfangstemperatur niedriger als oder gleich 84°C abgekühlt werden, dadurch gekennzeichnet, daß die Ausgangskörner durch Beschicken der Granulierzone mit Keimteilchen enthaltend Ammoniumnitrat in der Kristallmodifikation III erhalten werden.

**Revendications**

1. Procédé de préparation de granules nonagglomérants contenant du nitrate d'ammonium, procédé dans lequel on sèche et on tamise les granules provenant d'une zone de granulation et on refroidit rapidement les granules ayant la grosseur de grains désirés dans un seul lit fluide, caractérisé en ce que, dans le procédé de refroidissement dans le lit fluide, on évite pratiquement la formation de nitrate d'ammonium dans la modification cristalline IV en refroidissant les granules, si la température initiale des granules dans le procédé de refroidissement est supérieure à 84°C, à une température comprise entre 50 et 60°C et ultérieurement, pendant le stockage en vrac, en refroidissant encore plus les granules ainsi refroidis et, si la température initiale des granules dans le procédé de refroidissement est inférieure ou égale à 84°C, en refroidissant les granules à une température entre 32 et 40°C.

2. Procédé selon la revendication 1, procédé dans lequel on refroidit les granules ayant une température initiale supérieure à 84°C à une température de 50 à 60°C, caractérisé en ce qu'on enrobe avant stockage les granules obtenus avec un enrobage organique et ensuite on les traite par une poudre minérale.

3. Procédé selon la revendication 1, procédé dans lequel on refroidit des granules ayant une température initiale inférieure ou égale à 84°C, caractérisé en ce qu'on refroidit les granules à une température de 32 à 35°C.

4. Procédé selon la revendication 1 ou 3, procédé dans lequel on refroidit des granules ayant une température initiale inférieure ou égale à 84°C, caractérisé en ce qu'on obtient les granules de départ en fournissant à la zone de granulation des particules-noyaux contenant du nitrate d'ammonium dans la modification cristalline III.